# EUROPEAN PATENT APPLICATION

(11) **EP 4 548 752 A1**
(43) Date of publication of application: **07.05.2025**
(21) Application number: 24208782.3
(22) Date of filing: 24.10.2024
(51) Int. Cl.: A01G 31/02

(54) **AEROPONIC FARMING APPARATUS**

(30) Priority: 30.10.2023 US 202363594238 P
(71) Applicant: Fisher, Shawn, St John's, Newfoundland and Labrador A1B 1M9 (CA)
(72) Inventor: Fisher, Shawn, St John's, Newfoundland and Labrador A1B 1M9 (CA)
(74) Representative: FRKelly

(57) **Abstract**

An aeroponic farming appliance for plant growth is disclosed. The appliance includes a rotatable root chamber having an access door to the interior chamber volume, and at least a portion of the root chamber sidewall is transparent. The appliance also includes at least one standing plant riser, and at least one of a grow light and a grow light power connector.

## Description

### FIELD

This application relates to the field of aeroponic farming systems and more specifically to an aeroponic farming apparatus having a rotatable root chamber.

### INTRODUCTION

Traditionally, farming operations require large amounts of space, sunlight, soil, and water. Such farming may also be limited to specific geographies and seasons, and yields may be tied to the weather and therefore unpredictable. As resources for conventional farming operations are reduced, demand for the produce cultivated from the farming operations continue to grow. To supply growing populations with produce, there has been an increase in demand for alternative farming operations, such as vertical farming and aeroponic or hydroponic systems, for example.

In the restaurant industry, large shipments of produce are required to service customers. These shipments can be costly for restaurant owners and negatively impact the environment from increased use of trucking, packaging, and temperature regulation during shipping. Additionally, restaurants are often required to pay high garbage removal fees to dispose of the packaging on top of the shipping costs to receive the produce.

Accordingly, there is a need for a system that easily creates an environment conducive to plant growth that can be used in a regenerative way. More particularly, an apparatus for use in any environment (industrial, commercial (e.g. restaurants and catering), and residential) with an ability to grow many types of produce and an easy harvesting process would be beneficial.

### DRAWINGS

FIG. 1 is a perspective view of an aeroponic farming apparatus including a housing with a front wall hidden, in accordance with an embodiment;
FIG. 2 is a perspective view of a root chamber and standing plant risers of the aeroponic farming apparatus of FIG. 1;
FIG. 3 is a perspective view of a root chamber of the aeroponic farming apparatus of FIG. 1;
FIG. 4 is a partial transparent perspective view of the root chamber of the aeroponic farming apparatus of FIG. 1 with standing plant risers attached;
FIG. 5 is a perspective view of standing plant risers extending from an upper wall of the root chamber and a plurality of grow lights of the aeroponic farming apparatus of FIG. 1;
FIG. 6 is a schematic of the control system of the aeroponic farming apparatus of FIG. 1 in accordance with an embodiment;
FIG. 7 is a partial schematic cross sectional view of the aeroponic farming apparatus of FIG. 1;
FIG. 8 is a schematic of the nutrient subsystem of the aeroponic farming apparatus of FIG. 1;
FIG. 9 is a perspective view of the aeroponic farming apparatus including a housing in accordance with an embodiment; and
FIG. 10 is a side view of a crop pod in accordance with an embodiment.

### SUMMARY

Described herein is an aeroponic farming appliance for plant growth having a rotatable root chamber, the root chamber having a root chamber sidewall, a root chamber upper end having a root chamber upper wall connected to the root chamber sidewall, an interior chamber volume bounded at least in part by the root chamber sidewall and root chamber upper wall, and a root chamber rotation axis extending vertically through the root chamber upper end, the root chamber sidewall having an access door to the interior chamber volume, the root chamber upper wall having at least four root chamber crop pod carriers open to the interior chamber volume, at least a portion of the root chamber sidewall being transparent; at least one standing plant riser extending upwardly from the root chamber upper end, each standing plant riser having: an interior riser volume, and at least three riser crop pod carriers open to the interior riser volume, each of the at least three crop pod carriers distributed vertically at different elevations; at least one of: (a) a grow light positioned to emit light towards the at least one standing plant riser, and (b) a grow light power connector positioned to supply power to a grow light source, and at least one liquid outlet fluidly connected to the interior chamber volume.

### DESCRIPTION OF VARIOUS EMBODIMENTS

Numerous embodiments are described in this application, and are presented for illustrative purposes only. The described embodiments are not intended to be limiting in any sense. The invention is widely applicable to numerous embodiments, as is readily apparent from the disclosure herein. Those skilled in the art will recognize that the present invention may be practiced with modification and alteration without departing from the teachings disclosed herein. Although particular features of the present invention may be described with reference to one or more particular embodiments or figures, it should be understood that such features are not limited to usage in the one or more particular embodiments or figures with reference to which they are described.

The terms "an embodiment," "embodiment," "embodiments," "the embodiment," "the embodiments," "one or more embodiments," "some embodiments," and "one embodiment" mean "one or more (but not all) embodiments of the present invention(s)," unless expressly specified otherwise.

The terms "including," "comprising" and variations thereof mean "including but not limited to," unless expressly specified otherwise. A listing of items does not imply that any or all of the items are mutually exclusive, unless expressly specified otherwise. The terms "a," "an" and "the" mean "one or more," unless expressly specified otherwise.

As used herein and in the claims, two or more parts are said to be "coupled", "connected", "attached", "joined", "affixed", or "fastened" where the parts are joined or operate together either directly or indirectly (i.e., through one or more intermediate parts), so long as a link occurs. As used herein and in the claims, two or more parts are said to be "directly coupled", "directly connected", "directly attached", "directly joined", "directly affixed", or "directly fastened" where the parts are connected in physical contact with each other. As used herein, two or more parts are said to be "rigidly coupled", "rigidly connected", "rigidly attached", "rigidly joined", "rigidly affixed", or "rigidly fastened" where the parts are coupled so as to move as one while maintaining a constant orientation relative to each other. None of the terms "coupled", "connected", "attached", "joined", "affixed", and "fastened" distinguish the manner in which two or more parts are joined together.

Further, although method steps may be described (in the disclosure and / or in the claims) in a sequential order, such methods may be configured to work in alternate orders. In other words, any sequence or order of steps that may be described does not necessarily indicate a requirement that the steps be performed in that order. The steps of methods described herein may be performed in any order that is practical. Further, some steps may be performed simultaneously.

As used herein and in the claims, a first element is said to be 'communicatively coupled to' or 'communicatively connected to' or 'connected in communication with' a second element where the first element is configured to send or receive electronic signals (e.g. data) to or from the second element, and the second element is configured to receive or send the electronic signals from or to the first element. The communication may be wired (e.g. the first and second elements are connected by one or more data cables), or wireless (e.g. at least one of the first and second elements has a wireless transmitter, and at least the other of the first and second elements has a wireless receiver). The electronic signals may be analog or digital. The communication may be one-way or two-way. In some cases, the communication may conform to one or more standard protocols (e.g. SPI, I²C, Bluetooth^{™}, or IEEE^{™} 802.11).

As used herein and in the claims, two components are said to be "fluidly connected" or "fluidly coupled" where the two components are positioned along a common fluid flow path. The fluid connection may be formed in any manner that can transfer fluids between the two components, such as by a fluid conduit which may be formed as a pipe, hose, channel, or bored passageway. One or more other components can be positioned between the two fluidly coupled components. Two components described as being "downstream" or "upstream" of one another, are by implication fluidly connected.

As used herein and in the claims, a group of elements are said to 'collectively' perform an act where that act is performed by any one of the elements in the group, or performed cooperatively by two or more (or all) elements in the group.

Some elements herein may be identified by a part number, which is composed of a base number followed by an alphabetical or subscript-numerical suffix (e.g. 112a, or 112₁). Multiple elements herein may be identified by part numbers that share a base number in common and that differ by their suffixes (e.g. 112₁, 112₂, and 112s). All elements with a common base number may be referred to collectively or generically using the base number without a suffix (e.g. 112).

As used herein and in the claims, "up", "down", "above", "below", "upwardly", "vertical", "elevation" and similar terms are in reference to a directionality generally aligned with (e.g. parallel to) gravity. The terms "forward", "forwardly" and similar terms are in reference to a directionality generally that is transverse (e.g. perpendicular) to gravity and directed away from aeroponic farming apparatus 100. Accordingly, the terms "rear", "rearwardly" and similar terms are in reference to a directionality that is generally transverse (e.g. perpendicular) to gravity and directed towards aeroponic farming apparatus 100. However, none of the terms referred to in this paragraph imply any particular alignment between elements. For example, a first element may be said to be "vertically above" a second element, where the first element is at a higher elevation than the second element, and irrespective of whether the first element is vertically aligned with the second element.

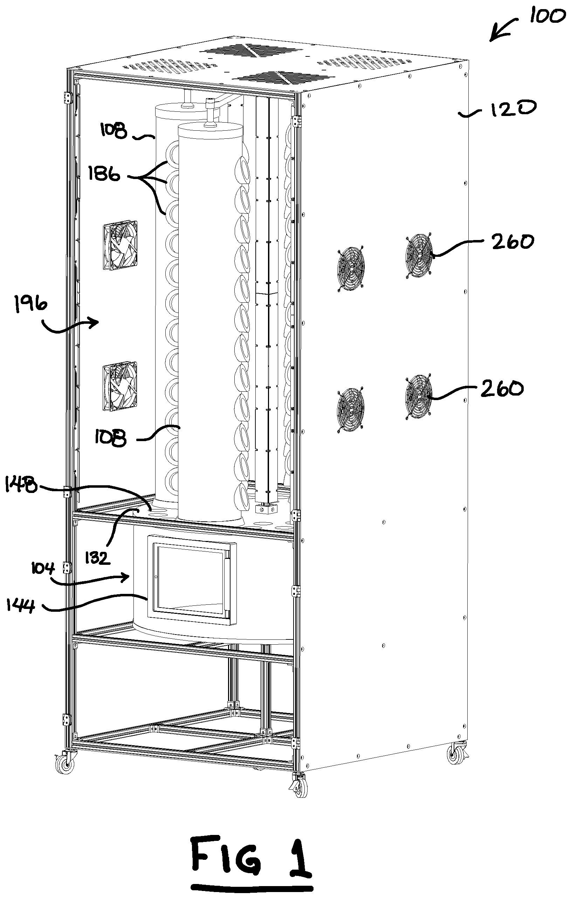

Referring to FIG. 1, aeroponic farming apparatus 100 may include a root chamber 104 and one or more standing plant risers 108. Each of the root chamber 104 and standing plant risers 108 are able to hold growing plants, including but not limited to produce such as lettuce, herbs, potatoes, carrots, etc. The root chamber 104 allows for root vegetables to be grown within the aeroponic farming apparatus 100. Some root vegetables, such as tubers (e.g. potatoes, turnips, beets, and yam) may be harvested from inside the root chamber 104.

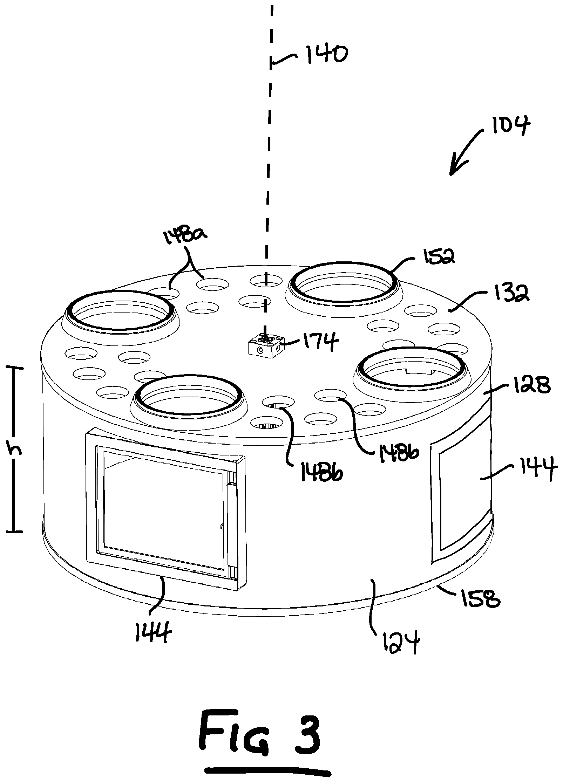

Turning to FIG. 3, at least root chamber 104 of the aeroponic farming apparatus 100 may be rotatable about a root chamber rotation axis 140. The root chamber 104 may also include at least a portion that is transparent, allowing the user to rotate root chamber 104 and identify the roots and/or root vegetables within the root chamber 104 that are ready for harvest or that require additional water or other nutrients for optimal growth. The rotatable aspect of the aeroponic farming apparatus 100 may also improve accessibility to harvest root vegetables within root chamber 104.

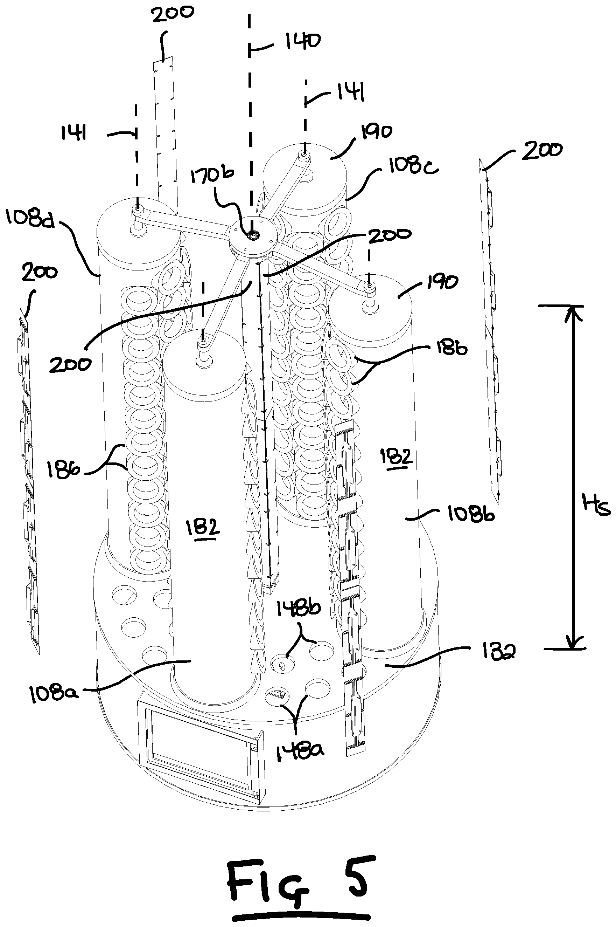

Turning to FIG. 5, in some embodiments the standing plant risers 108 may be rotatable about rotation axis 140 (e.g. in unison with root chamber 104). This may allow better visibility and user accessibility to the standing plant risers 108 for planting, harvesting, and/or tending to the plants. Alternatively or in addition to a rotatable root chamber 104, standing plant risers 108 may be rotatable about their own respective axes 141 (e.g. independent of rotation of root chamber 104). This can allow the user to turn each standing plant riser 108 independently to turn outwardly towards the user (e.g. instead of inwards towards the central grow lighting) for better access to crop pod carriers 186 (e.g. to remove or replace a crop pod) and/or plants/vegetables (e.g. to inspect or harvest). For example, each standing plant riser 108 may be rotatable by at least 45 degrees (e.g. 45 to 360 degrees) relative to root chamber 104.

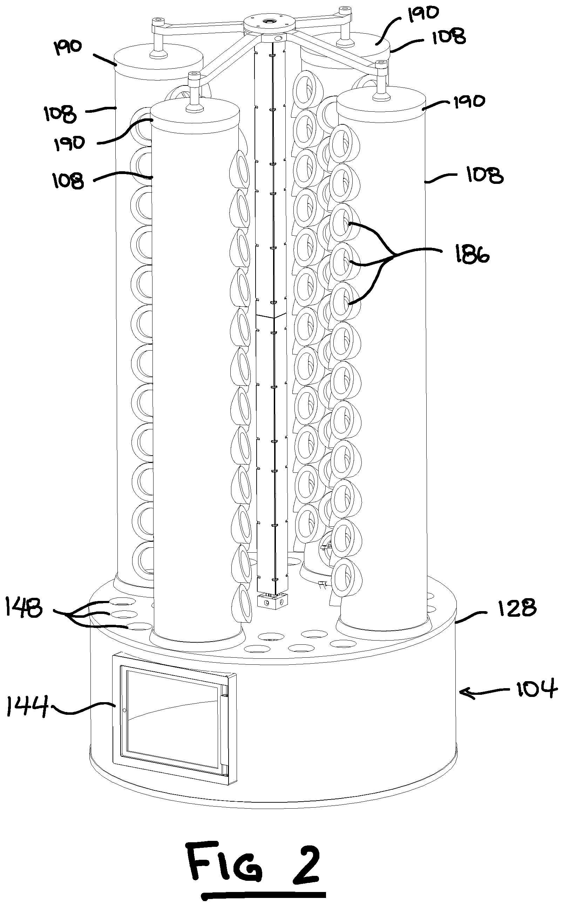

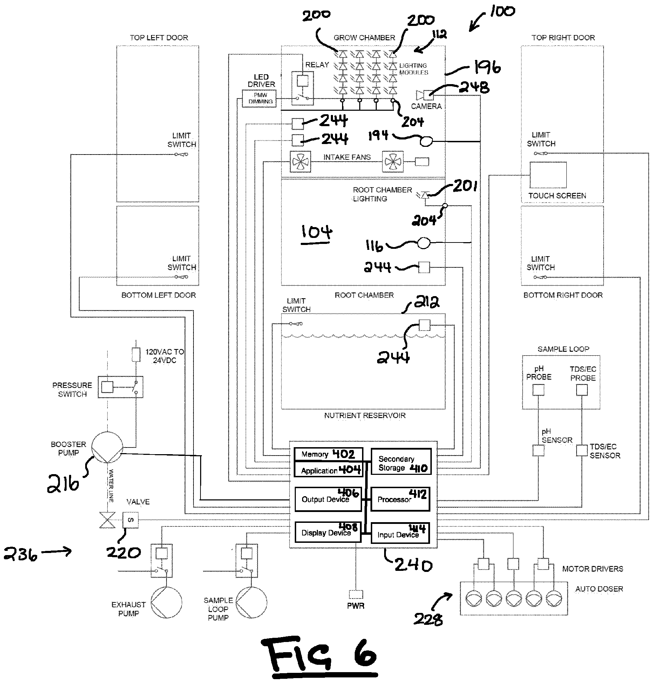

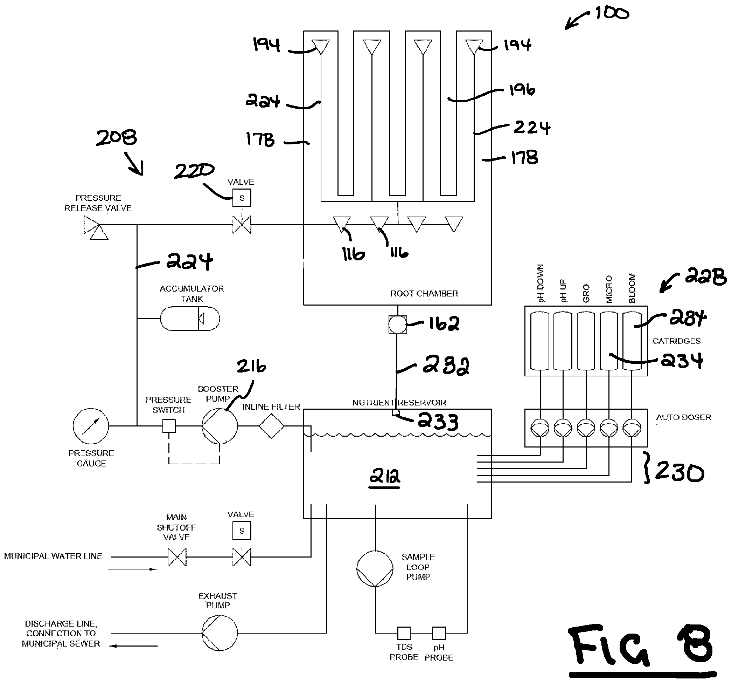

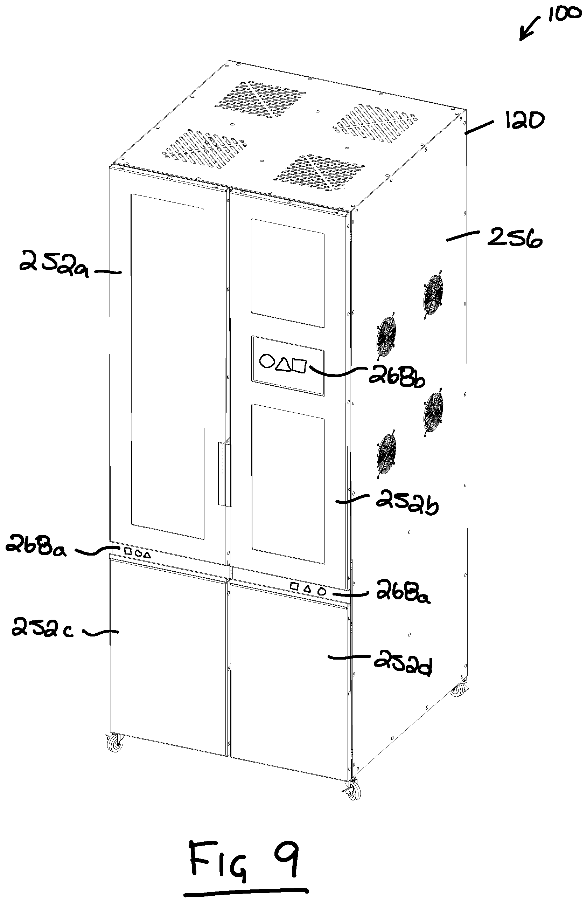

FIGS. 1 and 2 show an aeroponic farming apparatus 100 in accordance with at least one embodiment. As shown, aeroponic farming apparatus 100 may include root chamber 104, at least one standing plant riser 108. As shown in FIG. 6, aeroponic farming apparatus may include a control system 236 with a lighting subsystem 112 (FIG. 6). FIG. 8 illustrates that control system 236 may include a nutrient subsystem 208. Aeroponic farming apparatus 100 can include an outer housing 120, as shown in FIGS. 1 and 9.

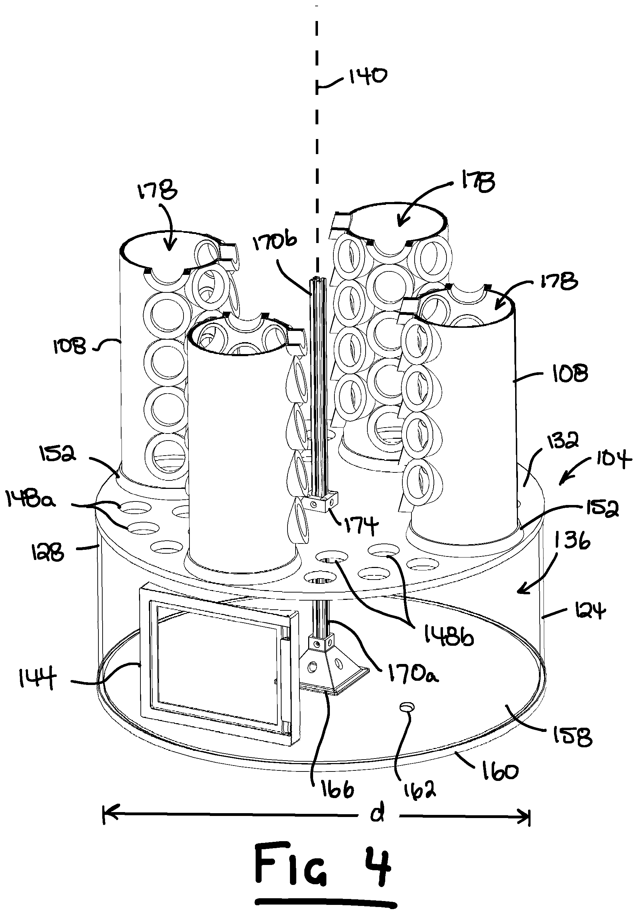

Referring to FIGS. 3 and 4, root chamber 104 can have any structure suitable for housing roots of plants or root vegetables. In some embodiments, root chamber 104 may be rotatable to improve user access to roots and/or root vegetables within root chamber 104. Root chamber 104 can have any overall shape, such as square, cylindrical, rectangular, or any other shape that allows root chamber 104 to hold roots or root vegetables within an interior chamber volume 136. In the illustrated example, root chamber 104 has a substantially cylindrical shape which can provide better dimensional consistency when rotating about a centered rotation axis 140. Components of root chamber 104 may be made of any material that is safe for contact with food, plants, roots, and/or root vegetables. For example, any one or more components of root chamber 104 and the components within may be made of glass, plexiglass, acrylic, steel, or aluminum.

Root chamber 104 may include a sidewall 124, an upper end 128, and an upper wall 132 at upper end 128. Root chamber 104 may include at least four root chamber crop pod carriers 148 configured to hold crop pods where a plant may grow to produce a harvest ready crop. The number of root chamber crop pod carriers 148 may depend on the size and arrangement of crop pod carriers 148. For example, root chamber 104 may include 5 to 100 crop pod carriers 148, such as the illustrated 32 crop pod carriers.

Crop pod carriers 148 may all have the same size (e.g. diameter) or may include crop pod carriers 148 of two or more sizes (e.g. 2 to 10 sizes). In the illustrated example, all of crop pod carriers 148 are the same size.

Crop pod carriers 148 may be arranged with the same or different spacing (i.e. density) between adjacent crop pod carriers 148. Different densities can allow root chamber 104 to support plants that grow larger/taller in lower density crop pod carriers 148a and plants that grow smaller/shorter in higher density crop pod carriers 148b. Crop pod carriers 148 of differing densities may have any suitable arrangement. For example, crop pod carriers 148 may be grouped by pod density with adjacent crop pod carriers being positioned adjacent other crop pod carriers of the same density; or they may be intermixed. In some examples, a circular array of lower density crop pod carriers may be positioned radially outwardly of a circular array of higher density crop pod carriers. Where grow lighting is shining radially outwardly from a location radially inward of the inner crop pod carriers, this arrangement may help mitigate larger/taller plants in the lower density crop pod carriers from blocking the light from reaching smaller/shorter plants in the higher density crop pod carriers. FIGS. 3 and 4 show an example having an array of outer crop pod carriers 148a and an array of inner crop pod carriers 148b, where all crop pod carriers 148a, 148b have approximately the same density.

In the illustrated example, crop pod carriers 148 are part of upper wall 132 and oriented to provide generally downward entry into interior chamber 136. This can allow leafy portions of the plants that require light to extend upwardly from crop pod carriers 148 and receive grow light exposure, and the root portion (which may include the edible produce) to extend downwardly into interior chamber 136.

In addition, root chamber 104 may include a lower wall 158, an interior chamber volume 136 bounded at least in part by sidewall 128 and upper wall 132, an access door 144 to interior chamber volume 136, and a rotation axis 140.

Sidewall 124 of root chamber 104 can encompass any wall that extends the height h of root chamber 104. For example, sidewall 124 can be a first side or many (or all) sides of root chamber 104 that has a square or rectangular configuration. In the illustrated example, sidewall 124 extends the full circumference of cylindrical root chamber 104. In some examples, sidewall 124 can fully enclose the interior chamber volume 136 of root chamber 104. In said examples, sidewall 124 may be substantially vapor tight to ensure moisture is generally inhibited from escaping from root chamber 104.

In some embodiments, at least a portion of sidewall 124 is transparent. For example, at least 25% of sidewall 124 may be transparent. As used herein and in the claims, a component is said to be "transparent" where it allows transmission of at least 10% (e.g. 10% - 100%) of the visible light spectrum (400nm to 700nm) such as for example at least 30% (e.g. 30% - 100%). In some embodiments, an entirety of sidewall 124 is transparent. For example, sidewall 124 may be formed substantially entirely of transparent plastic or glass (e.g. with a possible exception for minor components such as fasteners, hinges, brackets which may be non-transparent materials, such as metal).

Upper end 128 of root chamber 104 encompasses the upper portion of root chamber 104. Upper end 128 can include the upper wall 132 of the root chamber 104. In the illustrated embodiment, upper end 128 includes the upper wall 132 and connects for the at least one standing plant riser 108 of the aeroponic farming system 100.

Upper wall 132 is connected to sidewall 124 and houses at least four root chamber crop pod carriers 148. Upper wall 132 can be of any shape to accommodate the shape of the root chamber 104, such as square, rectangular, or any other shape. In the illustrated example, upper wall 132 is circular in correspondence with the cylindrical shape of root chamber sidewall 124. Upper wall 132 can, in some embodiments, include plant riser connectors 152 to allow the standing plant risers 108 to connect (e.g. rigidly connect) to the root chamber 104. Upper wall 132 can also be connected to sidewall 124 by a vapor tight connection to inhibit a loss of moisture from the root chamber 104 through the connection. In some embodiments, upper wall 132 can include a utility outlet 174.

Root chamber crop pod carriers 148 can have any structure for carrying and facilitating growth of crops within the crop pod carriers 148. The crop pod carriers 148 can be of any shape and size suitable for carrying a crop pod and supporting the crop pod and the crops grown within. In the illustrated embodiment, crop pod carriers 148 are circular apertures in shape. Crop pod carriers 148 can be located in any positioning on upper wall 132 to facilitate plant growth. For example, in the illustrated embodiment, crop pod carriers 148 are positioned in two circles of different diameters. Crop pod carriers 148 within the circle of a smaller diameter can be used to grow shorter root vegetables, alliums, leafy greens, and the like. Crop pod carriers 148 within the circle of a larger diameter can be used to grow tall root vegetables and fruiting plants.

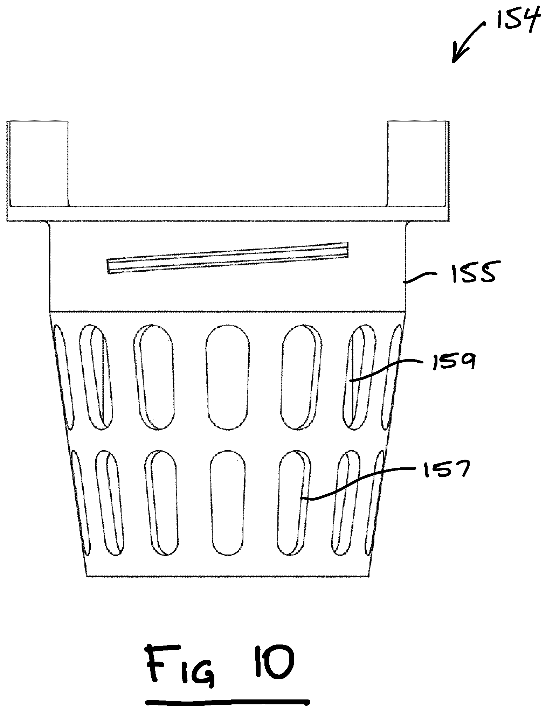

Crop pods can be placed into crop pod carriers 148 and used to house seeds for growth into plants ready for harvest. The crop pods can remove the requirement for a separate germination phase of the life of the plant. For example, a seed can be planted within a crop pod in crop pod carrier 148. The planted seed can grow within the crop pod until the plant is ready to be harvested without having to move and/or replant crop pod or the plant itself. FIG. 10 shows an example of a crop pod 154. As shown, crop pod 154 may have an exterior cage 155 with openings 157 to allow for moisture and root penetration, and an insert 159 (e.g. rubber or rubber-like resiliently compressible insert) for securely holding a seed through all of the seed's life stages: dormant, sprout, seedling, vegetative, budding, and flowering. To replace a plant (e.g. that has stopped producing or to change the type of plant), the seed and/or plant may be removed from the crop pod 154, and a new seed may be deposited into the crop pod 154 (e.g. into insert 159).

Lower wall 158 can connect to sidewall 124 to enclose a lower end of root chamber 104. Lower wall 158 can be any shape that accommodates the shape of the root chamber 104, such as square, rectangular, or any other shape. In the illustrated example, lower wall 158 is circular to correspond with the cylindrical shape of root chamber sidewall 124. Lower wall 158 can also be connected to sidewall 124 by a watertight (e.g. substantially impermeable to vapor and pooled liquid water) connection to inhibit a loss of moisture through the connection. In some examples, lower wall 158 can include a drainage port 162 and a utility inlet 166. In some examples, lower wall 158 may include a rotating bearing assembly 160 to facilitate rotation of the root chamber 104.

Interior chamber volume 136 can be of any shape and size to facilitate growth of roots and root vegetables within root chamber 104. Interior chamber volume 136 is at least partially bounded by the sidewall 124 and upper wall 132 of root chamber 104. Interior chamber volume can be fully bounded by sidewall 124, upper wall 132, and lower wall 158 of root chamber 104. Interior chamber volume 136 is fluidly connected to at least one liquid outlet 116. Chamber height h may be selected to provide sufficient space for the target plant specifies to grow unencumbered. For example, chamber height h may be at least 6 inches (e.g. 6 to 36 inches) and preferably at least 12 inches (e.g. 8 to 36 inches). Chamber diameter d may be selected to provide sufficient space for the target number of plants of the target plant species to grow unencumbered. For example, chamber diameter d may be at least 12 inches (e.g. 12 to 120 inches) and preferably at least 18 inches (e.g. 18 to 48 inches). In the illustrated example, height h is approximately 24 inches and diameter d is approximately 28 inches.

Liquid outlet 116 is operable to allow fluid flow from outside of the root chamber 104 to inside the interior chamber volume 136 to deliver water, nutrients, or any combination of liquids for use during plant growth. Liquid outlet 116 can be a valved inlet and may optionally include a spray nozzle (e.g. a misting nozzle), or may be any other outlet to introduce liquid to the interior chamber volume 136.

Access door 144 is positioned within sidewall 124 to allow access by a user into the interior chamber volume 136 of root chamber 104. Access door 144 can allow the user to harvest the root vegetables within root chamber 104 or assess the growth of roots and/or vegetables within root chamber 104, or perform root maintenance on the roots within root chamber 104 without removing chamber upper wall 132 and without removing any crop pods. Access door 144 may be connected to chamber sidewall 124 in any manner that allows access door 144 to open. For example, access door 144 can be hinged, sliding, folding, or any other type of door to allow access into the interior chamber volume 136. In some examples, access door 144 can be the portion of sidewall 124 that is transparent. In some examples, access door 144 can be made of glass, plexiglass, acrylic, steel, or any other suitable material. Access door 144 may have any size suitable to allow a user's hand and arm to easily pass through to access roots and vegetables within root chamber 104. For example, access door 144 when open may provide an opening into interior chamber volume 136 and the opening may be at least 36in² (e.g. 6in x 6in square opening or 6.8in diameter), such as 36in² to 300in². In the illustrated example, access door 144 provides approximately 12in x 12in square opening (i.e. about 144in²).

Root chamber sidewall 124 can have any number of access doors 144 (e.g. 1 to 12 access doors 144, such as 2-8 access doors 144). Access doors 144 may be abutting so that they can cooperatively form a larger opening into root chamber 104. Alternatively or in addition, access doors 104 may be circumferentially spaced apart to provide the user with additional options to access the interior of root chamber 104. For example, where root chamber sidewall 124 includes a plurality of access doors 144, the doors 144 may be substantially evenly circumferentially distributed (e.g. 2 doors spaced approximately 180 degrees apart, or 3 doors spaced approximately 120 degrees apart, or 4 doors spaced approximately 90 degrees apart). This may reduce the amount by which root chamber 104 needs to be rotated to face the nearest access door 144 towards the user. FIG. 3 shows an example with a plurality of access doors 144, including access door 144a spaced approximately 90 degrees from access door 144b.

Rotation axis 140 extends vertically through upper end 128 of root chamber 104. Rotation axis 140 can allow root chamber 104 to rotate in at least one (and preferably both) direction (i.e. clockwise or counterclockwise) around rotation axis 140. Rotation of root chamber 104 can allow the user to view and/or access any crop or root within the root chamber 104 through access door 144. In some embodiments, sidewall 124, upper end 132, upper wall 132 and lower wall 158 of root chamber 104 are all rotatable in unison around rotation axis 140. This can avoid tangling any of the roots around stationary elements of root chamber 104. In some embodiments, upper end 132 and upper wall 132 are rotatable around rotation axis 140 while sidewall 124 and lower wall 158 remain stationary. This can allow access door 144 to remain face forward while the upper wall 132 along with the planted crop pods in the crop pod carriers 148 rotate.

The rotation of root chamber 104 around rotation axis 140 can result in the root vegetables and/or roots within the root chamber 140 rotating in unison with root chamber 104. This can allow the user to view the roots and/or root vegetables within root chamber 104 through the transparent portion of sidewall 124 to determine if roots need additional care or if the vegetables are ready to be harvested. In some examples, the root chamber 104 can be rotated to view harvestable vegetables and the rotated further or back to allow the user to open access door 144. In some examples, sidewall 124 and access door 144 can stay stationary while the interior contents (i.e. the roots and vegetables) of root chamber 104 are rotated such that access into the root chamber 104 through door 144 can remain when the root or vegetable is rotated into view. Referring to FIG. 2, in some examples, standing plant riser(s) 108 are rotatable about the rotation axis 140 (FIG. 4) in unison with the root chamber 104. This may allow the user to rotate standing plant riser(s) 108 to provide greater access to the crops, crop pods, and crop pod carriers 186 on standing plant riser(s) 108. As described above, standing plant riser(s) 108 may alternatively or in addition be independently rotatable relative to root chamber 140.

Turning to FIG. 1, root chamber 104 may be rotatable around rotation axis 140 (FIG. 4) relative to one or more or all of housing 120 and nutrient reservoir 212 (FIG. 6). Root chamber 104 may be rotatable by at least 30 degrees in at least one direction (e.g. 30 to 360 degrees in one or both directions), and preferably at least 135 degrees in at least one direction (e.g. 135 to 360 degrees in one or both directions). In some embodiments, root chamber 104 is inhibited from rotating greater than 1 revolution (i.e. 360 degrees) in one direction. This may avoid the need for special rotating connections for power and/or liquid. In other embodiments, root chamber 104 can rotate greater than 1 revolution in one direction. This may avoid the need to rotate in reverse to access what is just beyond the 360 degree position.

Referring to FIG. 6, in some embodiments, root chamber 104 may include a light 201 (e.g. one or multiple bulbs, LEDs, or light tubes). Light 201 may be a grow light similar to grow lights 200, or may be another form of light (e.g. a standard light designed improve visibility and not specifically designed for indoor farming). Light 201 may be activated to improve visibility of roots and vegetables within root chamber 104 through the transparent root chamber sidewall and/or through a root chamber door.

As illustrated in FIG. 4, lower wall 158 of root chamber 104 can include a utility inlet 166, while upper wall 132 of root chamber 104 can include utility outlet 174. Root chamber 104 may further house a riser utility conduit 170a.

Utility conduit 170a can be of any size to allow electrical, computer, and fluid components to be housed within root chamber 104 without being exposed to any potential water, nutrients, roots, and/or root vegetables within the interior chamber volume 136. Utility inlet 166 within lower wall 158 can connect any electrical, plumbing, or computer components from outside of the root chamber 104 to the chamber utility conduit 170a. Chamber utility conduit 170a can allow these components to travel through the root chamber 104 and exit the root chamber 104 through chamber utility outlet 174 within upper wall 132. Chamber utility conduit 170a can be positioned anywhere within the root chamber 104 and can be of any size, shape, or length. In the illustrated embodiment, chamber utility conduit 170a extends vertical height h of root chamber 104 along the rotation axis 140 to connect the components from below root chamber 104 to above root chamber 104. In some embodiments, chamber utility conduit 170a can be located anywhere within root chamber 104, such as extending from sidewall 124 through upper wall 132, from lower wall 158 through sidewall 124, or any other configuration.

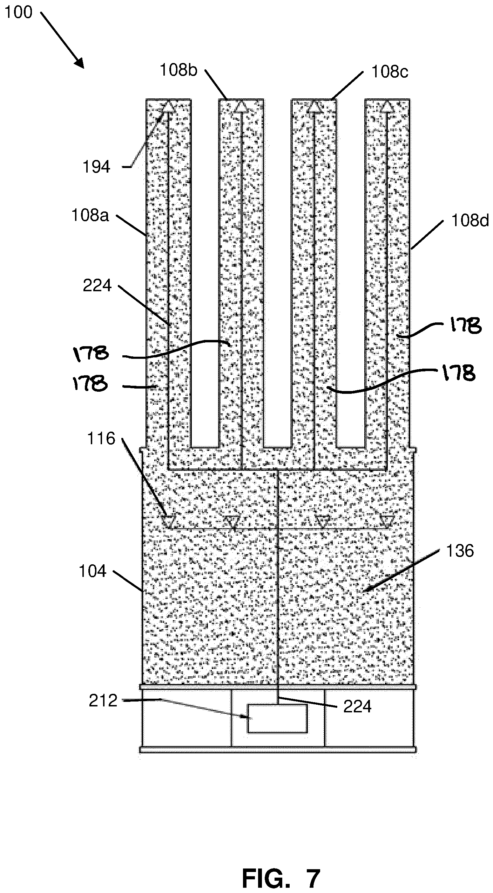

Referring to FIGS. 4 and 7, in some embodiments, chamber utility conduit 170a can be further used to provide a mounting structure for the liquid outlet 116 of root chamber 104. For example, liquid outlet 116 can be positioned in upper end 128 of root chamber 104 on the chamber utility conduit 170a to allow the water and/or nutrients to be applied to the roots and/or root vegetables from the upper end 128 of root chamber 104. Alternatively or in addition, one or more liquid outlets 116 can be mounted to chamber upper wall 132. For example, the liquid outlet(s) 116 may be oriented downwards from the upper wall 132.

Root chamber 104 may include one or multiple liquid outlets 116 (e.g. at least 2 such as 2 to 50 liquid outlets) to ensure even distribution of water and/or nutrients to the plants within the root chamber 104. In some embodiments, chamber utility conduit 170a can hold any type of sensor, such as a moisture sensor, for sensing environmental conditions within the root chamber 104. In some embodiments, a riser utility conduit 170b can extend vertically upwards from the root chamber 104, e.g. to continue chamber utility conduit 170a.

Lower wall 158 can further include a drainage port 162 to allow drainage of water and/or nutrients applied to the plants within root chamber 104 through liquid outlet 116. Drainage port 162 can be of any shape or size to allow for drainage, such as a single port, multiple ports, mesh, valved port, or any other structure to remove excess moisture.

Referring now to FIGS. 4 and 5, FIG. 5, shown therein is a perspective view of the standing plant risers 108 and lighting subsystem 112 of the aeroponic farming apparatus 100.

Standing plant risers 108 can have any structure to house roots of plants. Standing plant risers 108 can be of any shape to accommodate growth of plants, for example cylindrical, rectangular, square, or any shape having a hollow interior. In the illustrated embodiments, standing plants risers 108 are of a cylindrical shape. Standing plant risers 108 are connected to upper end 128 of root chamber 104 by plant riser connectors 152. In some examples, standing plant risers can be housed in a grow chamber 196.

Plant riser connectors 152 can allow standing plant risers 108 to connect to root chamber 104 to allow standing plant risers 108 to extend upwardly from root chamber 104. In some embodiments, plant riser connectors 152 allow water and/or nutrient drainage into root chamber 104. Plant riser connectors 152 can be any connection that allows the plant risers 108 to connect to the upper end 128 of root chamber 104. In some embodiments, the plant riser connectors 152 can include fixed fittings, rotatable fittings, snap fittings, screws, bolts, glue, or any other connector. In some embodiments, the plant riser connectors 152 can be removeable and re-attachable to allow the standing plant risers 108 to be replaced or repaired.

Standing plant riser 108 may have an interior riser volume 178 and at least three riser crop pod carriers 186 (e.g. 3 to 500 crop pod carriers 186, such as 36 crop pod carriers 186 in the illustrated example). In some embodiments, standing plant risers 108 can have a riser sidewall 182, a riser top 190 and a riser liquid outlet 194. In some embodiments, there can be multiple standing plant risers 108 (e.g. 2 to 24 risers 108, such as 3 to 8 risers 108). In the illustrated embodiment, four standing plant risers 108a-d are evenly distributed around the circumference of upper end 128 of root chamber 104.

Interior riser volume 178 of standing plant riser 108 can be of any shape and size to facilitate growth of roots and root vegetables within standing plant riser 108. Interior riser volume 178 is at least partially bounded by the riser sidewall 182 and riser top 190. The interior riser volume 178 can extend into interior chamber volume 136 of root chamber 104.

Riser sidewall 182 can encompass any wall that extends the height Hs of standing plant riser 108. For example, riser sidewall 182 can be a one or more (or all) sides of standing plant riser 108 that has a square or rectangular shape. In the illustrated example, riser sidewall 182 extends the full circumference of cylindrical standing plant riser 108. In some examples, riser sidewall 182 can fully surround the interior riser volume 178 of standing plant riser 108. In said examples, riser sidewall 182 may be substantially liquid impermeable (with the exception of the riser crop pod carriers 186) to inhibit a loss of moisture from standing plant riser 108.

Riser crop pod carriers 186 of standing plant riser 108 can have any structure for carrying and facilitating growth of crops within the crop pod carriers 186. The crop pod carriers 186 can be of any shape and size to allow crops to be grown within them. In the illustrated embodiment, crop pod carriers 186 are circular in shape. In some embodiments, crop pod carriers 186 can hold crop pods 154 (FIG. 10), as discussed in relation to chamber crop pod carriers 148.

As illustrated in FIG. 5, crop pod carriers 186 are distributed vertically at different elevations along riser sidewall 182. In some examples, crop pod carriers 186 can be located anywhere along riser sidewall 182. In some examples, there can be multiple crop pod carriers 186 circumferentially distributed at the same elevation. In the illustrated example, each standing plant riser 108 includes a plurality of side-by-side columns of vertically distributed crop pod carriers 186.

In the illustrated embodiment, crop pod carriers 186 are positioned and oriented to generally face radially inward (e.g. generally towards root chamber rotation axis 140). In some embodiments, crop pod carriers 186 can be located along any surface of the riser sidewall 182.

Riser top 190 is connected to riser sidewall 182. Riser top 190 can be of any shape to accommodate the shape of the standing plant riser 108, such as square, rectangular, or any other shape. In the illustrated example, riser top 109 is circular to correspond to the cylindrical shape of standing plant riser 108. Riser top 109 can be connected to riser sidewall 182 by a watertight connection to inhibit a loss of moisture from the interior riser volume 178 (FIG. 4) through the connection.

Referring to FIG. 7, in some embodiments, riser top 190 can include a riser liquid outlet 194. Riser liquid outlet 194 is operable to allow fluid flow from outside of the standing plant riser 108 to inside the interior riser volume 178 to deliver water, nutrients, or any combination of liquids for use during plant growth. Riser liquid outlet 194 can be a valved inlet and may optionally include a spray nozzle (e.g. a misting nozzle), or any other outlet to introduce liquid to the interior riser volume 178. In the illustrated embodiment, riser liquid outlet 194 is located at riser top 190 to allow liquid to interact with the roots of plants along the full height Hs of standing plant riser 108. Alternatively or in addition, riser 108 may include a plurality of riser liquid outlet 194 distributed along a height of the riser 108.

As shown in FIGS. 5 and 6, aeroponic farming apparatus 100 includes lighting subsystem 112. Lighting subsystem 112 may include one or more (or all) of grow lights 200 and grow light power connectors 204.

Grow lights 200 are configured to emit at least light frequencies that promote plant growth (e.g. 400nm to 700nm wavelength). In some embodiments, different plant species and varieties can require different percentages of wavelengths. For example, including 90% of a red light wavelength (600nm to 700nm) and 10% of a blue light wavelength (400nm to 500nm) can improve the growth of certain plants. In another example, including 80% red light wavelength and 20% blue light wavelength can improve growth of different plants. Any combination of wavelengths can be used for grow lights 200.

FIG. 5 illustrates an example placement of grow lights 200. Grow lights 200 can be positioned anywhere within the aeroponic farming apparatus 100. In the illustrated embodiments, grow lights 200 are located extending vertically from the center of root chamber 104 adjacent to the standing plant risers 108. As illustrated, grow lights 200 are directed outwardly from the center to shed light on standing plant risers 108. In some embodiments, as illustrated in FIG. 6, grow lights 200 can also be located within the interior chamber volume 136 (FIG. 4) of root chamber 104. Each grow lights 200 can be a single light bulb, light tube or LED, or an array of light bulbs, light tubes, or LEDs.

Power connector 204 provides a power connection and supplies power to the grow lights 200 within the aeroponic farming apparatus 100. Power connector 204 can be any type of connection that at least partially secures the corresponding grow light 200 in position and provides power, such as screw in or snap in socket for a light bulb or light tube. In another example, power connector 204 can be located anywhere within aeroponic farming apparatus 100. In the example illustrated in FIG. 6, multiple power connectors 204 can be used to supply power to the grow lights 200 in the grow chamber 196 and the root chamber 104 separately. In some embodiments, grow lights 200 are integrated lighted (e.g. LED light strips) that are preinstalled never intended to be replaced, and apparatus 100 may not include power connectors 204.

As shown in FIGS. 7 and 8, aeroponic farming apparatus 100 can include a nutrient subsystem 208. Nutrient subsystem 208 can include a nutrient reservoir 212, pump 216, valve 220, connection piping 224 and drainage piping 232. Nutrient subsystem 208 can also include root chamber liquid outlet(s) 116 and riser liquid outlet(s) 194.

Nutrient reservoir 212 can be of any size and shape to house water, nutrients, or any combination of water and nutrients and may include one or more sub compartments (e.g. separate compartments for water, nutrients, and a water-nutrient titrated mixture). In the illustrated example in FIGS. 7 and 8, nutrient reservoir 212 is located beneath root chamber 104. In any other example, nutrient reservoir 212 can be located anywhere else in aeroponic farming apparatus 100 or outside of the apparatus itself. Nutrient reservoir 212 can be connected to a municipal water line for automatic filling of the reservoir. Nutrient reservoir 212 can also discharge the reservoir back into municipal drainage. In some embodiments, nutrient reservoir 212 can be filled and flushed manually. Nutrient reservoir 212 can also be connected to a nutrient mix system 228.

Nutrient mix system 228 can be any type of nutrient additive system. In the illustrated example of FIG.8, nutrient mix system 228 includes a plurality of nutrient and/or pH cartridges 234 that can be released automatically or manually. In another example, nutrient mix system 228 can be a single nutrient. In some examples, nutrient mix system 228 can be defined by pre-determined parameters. Nutrient mix system 228 is fluidly connected to nutrient reservoir 212 by nutrient piping 230.

Pump 216 can be any type of pump system to allow water and/or nutrients to be moved from the nutrient reservoir 212 to the interior chamber volume 136 and the interior riser volume 178. In the illustrated embodiment, pump 216 takes the nutrient and/or water mixture from the nutrient reservoir 212 and carries the fluid through the connection piping 224.

Valve 220 is operable to allow fluid from connection piping 224 into interior chamber volume 136 and interior riser volume 178 at controlled amounts. Valve 220 can be any type of valve, such as a solenoid valve, a check valve, a gate valve, a pinch valve, or any other type of valve 220.

Connection piping 224 can be any type of fluid connection between nutrient reservoir 212 and the interior chamber volume 136 and interior riser volume 178.Connection piping 224 can connect the nutrient reservoir 212 through utility inlet 166 (FIG. 4), through chamber utility conduit 170a (FIG. 4) towards chamber utility outlet 174 (FIG. 4) and is fluidly connected to chamber liquid outlet(s) 116. In some embodiments, connection piping 224 extends through chamber utility outlet 174 (FIG. 4) upwardly along riser utility conduit 170b (FIG. 5) and fluidly connects to riser liquid outlets 194. Alternatively, connection piping may extend upwardly through interior chamber volume 136 outside of chamber utility conduit 170a, and upwardly through each individual interior riser volume 178 via riser connectors 152. For example, utility conduits 170a, 170b may not house any plumbing in some embodiments.

Run off piping 232 can be any type of fluid connection between interior chamber volume 136 and nutrient reservoir 212. Run off piping 232 can extend between drainage port 162 of interior chamber volume 136 to allow run-off from the applied water and/or nutrients to be re-used (i.e. recirculated by pump 216). As shown, nutrient reservoir 212 has a recirculation inlet 233.

In some embodiments, nutrient subsystem 208 can have additional components, including but not limited to an accumulator, a pressure switch, a pressure release valve, a pressure gauge, and peristaltic autodosing pump(s).

Aeroponic farming apparatus 100 can include a control system 236, as illustrated in FIG. 6. Control system 236 can include device 240, sensors 244 and camera 248.

Device 240 can be any device, such as a server computer, desktop computer, notebook computer, tablet, PDA, smartphone, or another computing device. In at least one embodiment, device 240 includes a connection with a network such as a wired or wireless connection to the Internet or to a private network. In some cases, network includes other types of computer or telecommunication networks.

Device 240 can include a memory 402, an application 404, an output device 406, a display device 408, a secondary storage device 410, a processor 412, and an input device 414. In some embodiments, device 200 includes multiple of any one or more of memory 402, application 404, output device 406, display device 408, secondary storage device 410, processor 412, and input device 414. In some embodiments, device 200 does not include one or more of applications 404, second storage devices 410, network connections, input devices 414, output devices 406, and display devices 408.

Memory 402 can include random access memory (RAM) or similar types of memory. Also, in some embodiments, memory 402 stores one or more applications 404 for execution by processor 412. Applications 404 correspond with software modules including computer executable instructions to perform processing for the functions and methods described below. Secondary storage device 410 can include a hard disk drive, floppy disk drive, CD drive, DVD drive, Blu-ray drive, solid state drive, flash memory or other types of non-volatile data storage.

In some embodiments, device 240 stores information in a remote storage device, such as cloud storage, accessible across a network. In some embodiments, device 240 stores information distributed across multiple storage devices, such as memory 402 and secondary storage device 410 (i.e. each of the multiple storage devices stores a portion of the information and collectively the multiple storage devices store all of the information). Accordingly, storing data on a storage device as used herein and in the claims, means storing that data in a local storage device, storing that data in a remote storage device, or storing that data distributed across multiple storage devices, each of which can be local or remote.

Generally, processor 412 can execute applications, computer readable instructions or programs. The applications, computer readable instructions or programs can be stored in memory 402 or in secondary storage 410, or can be received from remote storage accessible through network 416, for example. When executed, the applications, computer readable instructions or programs can configure the processor 412 (or multiple processors 412, collectively).

Input device 414 can include any device for entering information into device 240. For example, input device 414 can be a keyboard, key pad, cursor-control device, touch-screen, camera, or microphone. Input device 414 can also include input ports and wireless radios (e.g. Bluetooth^{®}, or 802.11x) for making wired and wireless connections to external devices.

Display device 408 can include any type of device for presenting visual information. For example, display device 408 can be a computer monitor, a flat-screen display, a projector, or a display panel.

Output device 406 can include any type of device for presenting a hard copy of information, such as a printer for example. Output device 406 can also include other types of output devices such as speakers, for example. In at least one embodiment, output device 406 includes one or more of output ports and wireless radios (e.g. Bluetooth^{®}, or 802.11x) for making wired and wireless connections to external devices.

FIG. 6 illustrates one example hardware schematic of a device 240. In alternative embodiments, device 240 contains fewer, additional, or different components. In addition, although aspects of an implementation of device 240 are described as being stored in memory, one skilled in the art will appreciate that these aspects can also be stored on or read from other types of computer program products or computer-readable media, such as secondary storage devices, including hard disks, floppy disks, CDs, or DVDs; a carrier wave from the Internet or other network; or other forms of RAM or ROM.

Device 240 can be operable to control aspects for the aeroponic farming apparatus 100. For example, device 240 may be connected to one or more (or all) of sensors 244, camera 248, chamber liquid outlet 116 (FIG. 8), and riser liquid outlet(s) 194. In some embodiments, device 240 can be connected to (and have some or complete control over) nutrient mix system 228, valve 220, pump 216, grow lights 200, power connector(s) 204, or any other component of the aeroponic farming apparatus 100.

Sensors 244 can be any type of sensor used in assisting plant growth and providing real time feedback on the environment. For example, sensors 244 can include one or more (or all) of humidity sensors, temperature sensors, ultrasonic sensors, pH sensors, or any other type of sensor.

Camera 248 can be any type of camera able to capture video and/or picture footage of the plants and their corresponding root systems. In the illustrated example, camera 248 is located within the grow chamber 196. In some embodiments, camera 248 can be within the root chamber 104. In other embodiments, there may be multiple cameras 248 placed anywhere within the apparatus.

The control system 236 can be operable to control each sensor 244, camera, 248, chamber liquid outlet 116, riser liquid outlet 194, nutrient mix system 228, valve 220, pump 216, grow lights 200, and power connector 204 to operate the apparatus 100 as desired by the user and/or the programmed configuration. For example, control system 236 can be configured to introduce fluid to the root chamber 104 through liquid chamber inlet 116 for a predetermined time interval each hour or as needed to maintain a programmed humidity value. In another example, control system 236 can be configured to supply power through power connector 204 to grow lights 200 for a predetermined time interval each day. Similar configurations can be applied to each of the elements connected to control system 236 to allow customizable plant growth.

Aeroponic farming apparatus 100 can further include housing 120, as illustrated in FIG. 9. Housing 120 can include doors 252, housing side walls 256, and one or more fan grills 260.

Housing 120 can have any size and shape that can at least partially or fully enclose all previously discussed components of aeroponic farming apparatus 100. In the illustrated example, housing 120 is a rectangular shape. In some examples, housing may be cylindrical, circular, square, or any other shape operable to house the other components of apparatus 100. Housing 120 can include a support frame. In some embodiments, housing 120 is brushed aluminum steel. In other embodiments, housing 120 can be any other material.

Referring to FIGS. 1 and 9, housing 120 may include one or more doors 252 or alternatively may have a permanently open front and no door. One or more of door(s) 252 (e.g. door(s) 252 for grow chamber 196) may assist with providing some or complete sealing to the interior of at least the upper chamber where the risers are located. This can help maintain the atmospheric conditions (e.g. O₂, CO₂, temperature and/or humidity) within the housing 120 to promote plant growth. Door(s) 120 can be of any size, shape and function that allows user access to the interior of housing 120. In the illustrated example, housing 120 has four doors 252a-d. Doors 252a and 252b are operable to access grow chamber 196 and standing plant risers 108. Doors 252a-b can include windows 264 to allow a user to view into grow chamber 196. Doors 252c and 252d are operable to access root chamber 104. Doors 252 can be sliding, hinged, folding, or any other type of door 252 to allow access into the aeroponic farming apparatus 100.

In some embodiments, apparatus 100 includes one or more control panels 268. Control panels Control panels 268 can be connected to control system 236 to allow a user to input control operations within apparatus 100 and see sensor 244 measurements without having to access control system 236. Control panels 268 may be located anywhere on apparatus 100 that allows for user access from an exterior of apparatus 100. For example, a control panel 268 may be located on a housing sidewall 256 or door 252 and outward facing. FIG. 9 shows an example having control panels 268a located on housing sidewall 256, and a control panel 268b located on door 252b. Control panels 268 may include any display and/or user input components, such as for example a digital display screen (e.g. LCD or OLED display, optionally a touchscreen), indicator lighting (e.g. LED lights), and/or physical input devices (e.g. buttons, switches, knobs).

Housing side walls 256 can include the side, upper, and base wall of housing 120. Housing side walls 256 can be any shape and size to allow for a fully enclosed housing 120. In the illustrated embodiments, housing side walls 256 are rectangular. In some embodiments, housing side walls 156 can be square, circular, or any other shape to fully enclose housing 120.

Fan grill 260 can be any size, shape, or location along housing 120 to allow air intake into housing 120 (e.g. into grow chamber 196). In the illustrated embodiment, fan grill 260 is located within housing side wall 256. In some embodiments, fan grill 260 can be located along any other housing side wall 256. In some embodiments, there may be multiple fan grills 260 within housing 120. FIG. 9 shows an example having four fans with grills 260 located on one housing sidewall 256.

While the above description provides examples of the embodiments, it will be appreciated that some features and/or functions of the described embodiments are susceptible to modification without departing from the spirit and principles of operation of the described embodiments. Accordingly, what has been described above has been intended to be illustrative of the invention and non-limiting and it will be understood by persons skilled in the art that other variants and modifications may be made without departing from the scope of the invention as defined in the claims appended hereto. The scope of the claims should not be limited by the preferred embodiments and examples, but should be given the broadest interpretation consistent with the description as a whole.

### ITEMS:

Item 1: An aeroponic farming appliance for plant growth comprising:
   a rotatable root chamber, the root chamber having
      a root chamber sidewall,
      a root chamber upper end having a root chamber upper wall connected to the root chamber sidewall,
      an interior chamber volume bounded at least in part by the root chamber sidewall and root chamber upper wall, and
      a root chamber rotation axis extending vertically through the root chamber upper end,
      the root chamber sidewall having at least one access door to the interior chamber volume,
      the root chamber upper wall having at least four root chamber crop pod carriers open to the interior chamber volume,
      at least a portion of the root chamber sidewall being transparent;
   at least one standing plant riser extending upwardly from the root chamber upper end, each standing plant riser having:
      an interior riser volume, and
      at least three riser crop pod carriers open to the interior riser volume, each of the at least three crop pod carriers distributed vertically at different elevations;
   at least one of:
      a) a grow light positioned to emit light towards the at least one standing plant riser, and
      b) a grow light power connector positioned to supply power to a grow light source, and
   at least one liquid outlet oriented to discharge into the interior chamber volume.
Item 2: The aeroponic farming appliance of any preceding item, wherein the root chamber sidewall has a cylindrical shape.
Item 3: The aeroponic farming appliance of any preceding item, wherein the root chamber rotation axis extends through a center of the cylindrical shape.
Item 4: The aeroponic farming appliance of any preceding item, wherein the at least one standing plant riser is rotatable about the root chamber rotation axis in unison with the root chamber.
Item 5: The aeroponic farming appliance of any preceding item, wherein the at least one standing plant rise comprises at least four standing plant risers, the at least four standing plant risers evenly spaced around the root chamber rotation axis.
Item 6: The aeroponic farming appliance of any preceding item, wherein the appliance comprises at least four grow lights including the grow light, each of the at least four grow lights positioned radially inward of the at least four standing plant risers and oriented to emit light radially outwardly.
Item 7: The aeroponic farming appliance of any preceding item, wherein the at least one liquid outlet is a spray nozzle.
Item 8: The aeroponic farming appliance of any preceding item, wherein the root chamber further comprises a utility conduit extending vertically through a center of the root chamber, the at least one liquid outlet mounted to the utility conduit.
Item 9: The aeroponic farming appliance of any preceding item, wherein the root chamber and the at least one standing plant riser are fluidly connected to a nutrient reservoir.
Item 10: The aeroponic farming appliance of any preceding item, wherein the at least one standing plant riser has at least one riser liquid outlet oriented to discharge into the interior riser volume.
Item 11: The aeroponic farming appliance of any preceding item, wherein the nutrient reservoir is fluidly connected to each of the at least one liquid outlet and to the at least one riser liquid outlet of each standing plant riser.
Item 12: The aeroponic farming appliance of any preceding item, wherein the nutrient reservoir has a recirculation inlet downstream of the interior chamber volume and the interior riser volume of each standing plant riser.
Item 13: The aeroponic farming appliance of any preceding item, further comprising a housing surrounding the root chamber and the at least one standing plant riser.
Item 14: The aeroponic framing appliance of any preceding item, further comprising a pump fluidly connected to the nutrient reservoir and a control system having control over the pump.
Item 15: The aeroponic farming appliance of any preceding item, wherein the control system has control over power to the at least one of the grow light and the grow light power connector.
Item 16: The aeroponic farming appliance of any preceding item, further comprising at least one sensor communicatively connected to the control system, the at least one sensor including at least one of a humidity sensor, a temperature sensor, an ultrasonic sensor, and a pH sensor.
Item 17: The aeroponic farming appliance of any preceding item, further comprising a display communicatively connected to the control system, wherein the control system is configured to direct the display to show information based at least in part on data from the at least one sensor.
Item 18: The aeroponic farming appliance of any preceding item, wherein the control system is operable to monitor nutrient reservoir dosing.
Item 19. The aeroponic farming appliance of any preceding item, wherein each standing plant riser has a vertical rotation axis, and each standing plant riser is rotatable relative to the root chamber about the vertical rotation axis of that standing plant riser.
Item 20. The aeroponic farming appliance of any preceding item, further comprising a light located inside the root chamber.

## Claims

1. An aeroponic farming appliance for plant growth comprising:
a rotatable root chamber, the root chamber having
a root chamber sidewall,
a root chamber upper end having a root chamber upper wall connected to the root chamber sidewall,
an interior chamber volume bounded at least in part by the root chamber sidewall and root chamber upper wall, and
a root chamber rotation axis extending vertically through the root chamber upper end,
the root chamber sidewall having at least one access door to the interior chamber volume,
the root chamber upper wall having at least four root chamber crop pod carriers open to the interior chamber volume,
at least a portion of the root chamber sidewall being transparent;
at least one standing plant riser extending upwardly from the root chamber upper end, each standing plant riser having:
an interior riser volume, and
at least three riser crop pod carriers open to the interior riser volume, each of the at least three crop pod carriers distributed vertically at different elevations;
at least one of:
a) a grow light positioned to emit light towards the at least one standing plant riser, and
b) a grow light power connector positioned to supply power to a grow light source, and
at least one liquid outlet oriented to discharge into the interior chamber volume.

2. The aeroponic farming appliance of claim 1, wherein the root chamber sidewall has a cylindrical shape, and wherein, optionally, the root chamber rotation axis extends through a center of the cylindrical shape.

3. The aeroponic farming appliance of claim 1 or 2, wherein the at least one standing plant riser is rotatable about the root chamber rotation axis in unison with the root chamber.

4. The aeroponic farming appliance of claim 2, wherein the at least one standing plant rise comprises at least four standing plant risers, the at least four standing plant risers evenly spaced around the root chamber rotation axis, and wherein, optionally, the appliance comprises at least four grow lights including the grow light, each of the at least four grow lights positioned radially inward of the at least four standing plant risers and oriented to emit light radially outwardly.

5. The aeroponic farming appliance of any preceding claim, wherein the at least one liquid outlet is a spray nozzle.

6. The aeroponic farming appliance of any preceding claim, wherein the root chamber further comprises a utility conduit extending vertically through a center of the root chamber, the at least one liquid outlet mounted to the utility conduit.

7. The aeroponic farming appliance of any preceding claim, wherein the root chamber and the at least one standing plant riser are fluidly connected to a nutrient reservoir.

8. The aeroponic farming appliance of claim 7, wherein the at least one standing plant riser has at least one riser liquid outlet oriented to discharge into the interior riser volume.

9. The aeroponic farming appliance of claim 8, wherein the nutrient reservoir is fluidly connected to each of the at least one liquid outlet and to the at least one riser liquid outlet of each standing plant riser, and wherein, optionally, the nutrient reservoir has a recirculation inlet downstream of the interior chamber volume and the interior riser volume of each standing plant riser.

10. The aeroponic farming appliance of any preceding claim, further comprising a housing surrounding the root chamber and the at least one standing plant riser.

11. The aeroponic framing appliance of claim 9, further comprising a pump fluidly connected to the nutrient reservoir and a control system having control over the pump, and wherein, optionally, the control system is operable to monitor nutrient reservoir dosing.

12. The aeroponic farming appliance of claim 11, wherein the control system has control over power to the at least one of the grow light and the grow light power connector.

13. The aeroponic farming appliance of claim 12, further comprising at least one sensor communicatively connected to the control system, the at least one sensor including at least one of a humidity sensor, a temperature sensor, an ultrasonic sensor, and a pH sensor, and wherein, optionally, the aeroponic farming appliance further comprises a display communicatively connected to the control system, wherein the control system is configured to direct the display to show information based at least in part on data from the at least one sensor.

14. The aeroponic farming appliance of any preceding claim, wherein each standing plant riser has a vertical rotation axis, and each standing plant riser is rotatable relative to the root chamber about the vertical rotation axis of that standing plant riser.

15. The aeroponic farming appliance of any preceding claim, further comprising a light located inside the root chamber.
